# EUROPEAN PATENT SPECIFICATION

(11) **EP 3 162 490 B1**
(45) Date of publication and mention of the grant of the patent: **30.10.2019**
(21) Application number: 15855165.5
(22) Date of filing: 08.10.2015
(51) Int. Cl.: B23K 31/00, B23K 9/00, B23K 9/02, B23K 15/00, B23K 26/00, B23K 26/282, G21C 5/00, B23K 9/028, B23K 9/167, B23K 9/28, B23K 37/02, B23K 101/04

(54) **CYLINDRICAL-STRUCTURE WELDING SYSTEM AND WELDING METHOD**
ZYLINDERSTRUKTURSCHWEISSSYSTEM UND SCHWEISSVERFAHREN
SYSTÈME ET PROCÉDÉ DE SOUDAGE DE STRUCTURE CYLINDRIQUE

(30) Priority: 31.10.2014 JP 2014223422
(43) Date of publication of application: 03.05.2017
(73) Proprietor: Mitsubishi Heavy Industries, Ltd., Tokyo 108-8215 (JP)
(72) Inventor: TERAMAE, Takuma, Tokyo 108-8215 (JP); TSUBOTA, Shuho, Tokyo 108-8215 (JP); FUKUMOTO, Seiji, Tokyo 108-8215 (JP); WAKAYAMA, Tomoaki, Tokyo 108-8215 (JP)
(74) Representative: Intès, Didier Gérard André
(86) International application number: PCT/JP2015/078680
(87) International publication number: WO 2016/067890

(56) References cited:
- EP-A2- 1 211 012
- JP-A- H05 337 663
- JP-A- H06 117 827
- JP-A- S61 238 466
- JP-A- 2002 144 038
- JP-A- 2013 013 921
- US-A- 5 603 447

## Description

### Field

The present invention relates to a welding system and a welding method of cylindrical structures which are stacked in an axial direction thereof and contact surfaces thereof are welded.

### Background

A single cylindrical construction may be manufactured by stacking multiple cylindrical structures of the same diameter in an axial direction thereof and welding the cylindrical structures. As a cylindrical construction, for example, a construction having a large thickness and a large diameter like a core barrel of a nuclear power plant (see Patent Literature 1) may be included.

Further, as a welding apparatus, an apparatus which monitors the welding situation (see Patent Literature 2) or an apparatus which sets welding conditions while detecting an angle (see Patent Literature 3) may be included.

### Citation List

### Patent Literature

Patent Literature 1: Japanese Laid-open Patent Publication No. 2001-108778
Patent Literature 2: Japanese Laid-open Patent Publication No. 5-337663
Patent Literature 3: Japanese Examined Patent Application Publication No. 3-2586

EP1211012 discloses an apparatus and a method for welding a hermetic compressor. US5603447 discloses a vehicle wheel welding station with crossed straight welding torches.

### Summary

### Technical Problem

Here, when welding the circumferential direction of a thick-walled structure as the core barrel described in Patent Literature 1, welding is performed by using a filler metal. In this case, since it is not possible to weld the circumferential direction at once, there is a difference in weld contraction or the like due to a welded portion and a non-welded portion, and as a result, fluctuations occur in an amount of inclination or a direction of inclination of an upper cylindrical structure with respect to a lower cylindrical structure. Especially, in the case of a large-sized thick plate, the difference in the weld contraction or the like increases due to the large amount of heat input, thereby the fluctuation increases. Therefore, as in Patent Literatures 2 and 3, by detecting the amount of inclination or the direction of inclination to adjust the welding conditions based on the result, it is possible to reduce the amount of inclination of the upper cylindrical structure with respect to the lower cylindrical structure. Further, in order to correct the amount of inclination, it is possible to easily correct the amount of inclination by performing the welding at a position separate by a predetermined angle in the circumferential direction after performing welding for a predetermined angle. However, there is a problem that time is required for the work.

An object of the present invention is to provide a welding system and a welding method for cylindrical structures that can efficiently weld cylindrical structures with high precision in order to solve the above-mentioned problems.

### Solution to Problem

According to the present invention, there is provided a welding system of cylindrical structures as defined by claim 1, which welds a welding end surface of an upper cylindrical structure and a welding end surface of a lower cylindrical structure, each of which being an end surface in an axial direction thereof and facing each other, the welding system
comprising: two or more welding apparatuses which are opposite to the welding end surfaces of the upper cylindrical structure and the lower cylindrical structure and are disposed at equal arrangement intervals in the circumferential direction of the cylindrical structures; a moving device which is configured to rotate the upper cylindrical structure and the lower cylindrical structure relative to the welding apparatuses in a circumferential direction of the cylindrical structures; and a control device which is configured to control operations of the welding apparatuses and the moving device, wherein each of the welding apparatuses has a filler metal and a heating source which melts the filler metal, and is configured to melt and fuse the filler metal on the welding end surfaces to thereby weld the welding end surfaces, and the control device is further configured to continuously rotate the upper cylindrical structure and the lower cylindrical structure by an angle of the arrangement interval of the welding apparatuses by the moving device, while welding the welding end surfaces with the welding apparatuses.

Preferably, each of the welding apparatuses is configured to weld the welding end surfaces by arc welding or high-density energy.

The welding system of the cylindrical structures comprises; a side surface position detection unit which is configured to measure a position of a side surface of the upper cylindrical structure; an upper surface position detection unit which is configured to measure a position of an upper surface of the upper cylindrical structure and a width detection unit which is configured to measure displacement between the upper cylindrical structure and the lower cylindrical structure, wherein the control device is further configured to detect a positional deviation of the upper cylindrical structure with respect to the lower cylindrical structure based on the position detected by the side surface position detection unit, the position detected by the upper surface position detection unit and the displacement detected by the width detection unit, and control the operations of the moving device and the welding apparatuses based on the detected positional deviation.

Preferably, the control device is further configured to detect the positions by the side surface position detection unit and the upper surface position detection unit, while continuously rotating the upper cylindrical structure, the lower cylindrical structure, and the welding apparatuses by the angle of the arrangement interval of the welding apparatuses by the moving device, and the control device is further configured to determine a next welding condition to continuously rotate the upper cylindrical structure and the lower cylindrical structure by the angle of the arrangement interval of the welding apparatuses by the moving device, while welding the welding end surfaces with the welding apparatuses, based on the detected result.

Preferably, the welding apparatuses include an outer welding apparatus which is configured to weld the welding end surfaces of the upper cylindrical structure and the lower cylindrical structure on a radially outer side of the cylindrical structures.

Preferably, the welding apparatuses include an inner welding apparatus which is configured to weld the welding end surfaces of the upper cylindrical structure and the lower cylindrical structure on a radially inner side of the cylindrical structures.

According to the present invention, there is provided a method of welding cylindrical structures as defined by claim 6, the method comprising: placing an upper cylindrical structure on a lower cylindrical structure and bringing a welding end surface of an upper cylindrical structure and a welding end
surface of a lower cylindrical structure into contact with each other, each of which being an end surface and facing each other; melting and fusing a filler metal on the welding end surfaces by two or more welding apparatuses which are opposite to the welding end surfaces of the upper cylindrical structure and the lower cylindrical structure and are disposed at equal intervals in the circumferential direction of the cylindrical structures, and continuously rotating the welding end surfaces by an angle of the arrangement interval of the welding apparatuses, while welding the welding end surfaces.

The continuous rotation by the angle of the arrangement interval of the welding apparatuses is performed multiple times, and the method further comprises: measuring a position of a side surface of the upper cylindrical structure, a position of an upper surface of the upper cylindrical structure and a displacement between the upper cylindrical structure and the lower cylindrical structure, while continuously rotating the upper cylindrical structure, the lower cylindrical structure, and the welding apparatuses by the angle of the arrangement interval of the welding apparatuses; and determining a next welding condition to continuously rotate the upper cylindrical structure and the lower cylindrical structure by the angle of the arrangement interval of the welding apparatuses, while welding the welding end surfaces with the welding apparatuses, based on the detected result.

### Advantageous Effects of Invention

According to the present invention, an effect which is efficiently capable of welding the cylindrical structures with high precision can be achieved.

### Brief Description of Drawings

FIG. 1 is a partial cross-sectional perspective view illustrating a pressurized water reactor.
FIG. 2 is a cross-sectional view illustrating a core barrel.
FIG. 3 is a schematic view illustrating a region including a welded portion.
FIG. 4 is a schematic view illustrating a schematic configuration of a welding system.
FIG. 5 is a schematic view illustrating an example of an arrangement of a welding apparatus of a welding system.
FIG. 6 is a flowchart illustrating an example of a welding method using a welding system.

### Description of Embodiments

Hereinafter, preferred embodiments of the present invention will be described in detail with reference to accompanying drawings. Further, the present invention is not limited by the embodiments. Further, in the present embodiment, the case of welding a core barrel of a reactor will be described, but the present invention is not limited thereto. The welding system and the welding method for cylindrical structures according to the present embodiment can be used in the case of welding the circumferential surface of a cylinder so that two cylindrical structures are connected to each other in the axial direction of the cylinder. Here, the cylindrical structure of the present embodiment is a structure in which a thickness of a plate thereof is large. Here, the structure in which the thickness of the plate thereof is large, for example, is a structure with the thickness of the plate of 30 mm or more. The thickness of the plate of the cylindrical structure is not limited to 30 mm or more.

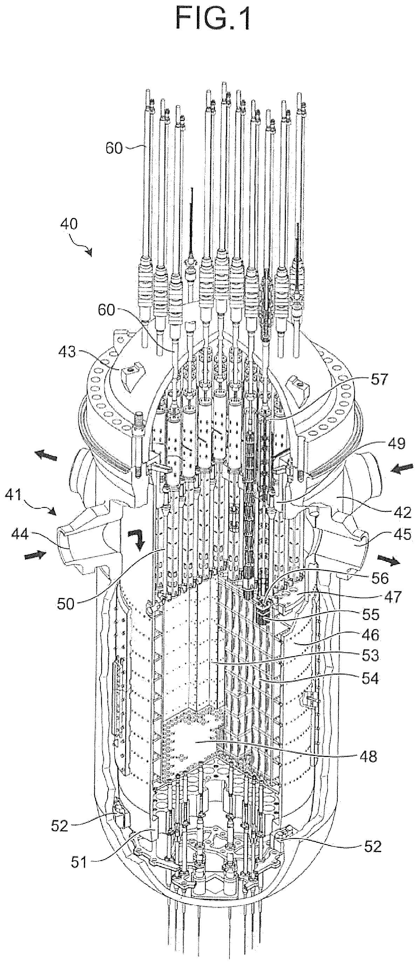

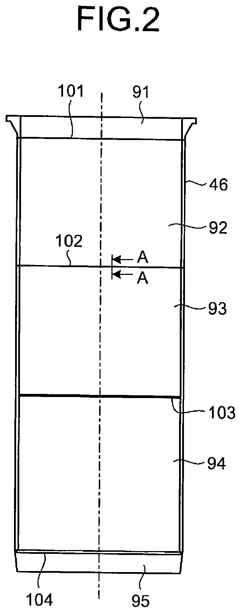

First, a core barrel as an example of a welding target will be described with reference to FIGS. 1 and 2. FIG. 1 is a partial cross-sectional perspective view illustrating a pressurized water reactor. The reactor of this embodiment is a pressurized water reactor (PWR) which uses light water as reactor coolant and neutron moderator to produce high-temperature and high-pressure water which is not boiled over the entire reactor core, and sends the high-temperature and high-pressure water to a steam generator to generate steam by heat exchange, and sends the steam to a turbine generator to generate electricity.

As illustrated in FIG. 1, a pressurized water reactor 40 has a reactor vessel 41. The reactor vessel 41 is configured to include a reactor vessel main body 42 and a reactor vessel lid 43 mounted on the top of the reactor vessel main body 42 so that in-core structures can be inserted into the reactor vessel 41. The reactor vessel lid 43 can be opened and closed with respect to the reactor vessel main body 42. The reactor vessel main body 42 has a cylindrical shape which has an open upper part and a spherically closed lower part, and the upper portion of reactor vessel main body 42 is formed with inlet nozzles 44 and outlet nozzles 45 which supply and discharge light water (coolant) as primary cooling water.

Inside the reactor vessel main body 42, a core barrel 46 having a cylindrical shape is disposed below the inlet nozzles 44 and the outlet nozzles 45 with a predetermined gap from the inner surface of the reactor vessel main body 42. A disk-shaped lower core plate 48 formed with multiple flow holes (not illustrated) is connected to a lower portion of the core barrel 46. A disk-shaped upper core support plate 49 located above the core barrel 46 is fixed inside the reactor vessel main body 42. An upper core plate 47 is suspended and supported from the upper core support plate 49 via multiple core support columns 50. A disk-shaped lower core support plate 51 located below the core barrel 46 is fixed inside the reactor vessel main body 42. The lower core support plate 51, that is, the lower end portion of the core barrel 46 is positioned and held on the inner surface of the reactor vessel main body 42 by multiple radial support keys 52.

A reactor core 53 is formed by the core barrel 46, the upper core plate 47 and the lower core plate 48, and a large number of fuel assemblies 54 are disposed in the reactor core 53. The fuel assemblies 54 are configured by multiple fuel rods bundled in a grid shape by a support grid, an upper nozzle is fixed to the upper end portion thereof, and meanwhile, a lower nozzle is fixed to the lower end portion thereof. Further, multiple control rods 55 are grouped at their upper ends as a control rod cluster 56 and can be inserted into the fuel assembly 54. On the upper core support plate 49, a large number of control rod cluster guide pipes 57 are supported through the upper core support plate 49, and the lower end portions thereof extend to the control rod cluster 56 of the fuel assembly 54.

A control rod drive device of a magnetic jack is provided on the upper portion of the reactor vessel lid 43 constituting the reactor vessel 41 and is housed in a housing integrated with the reactor vessel lid 43. The upper end portions of the multiple control rod cluster guide tubes extend to the control rod drive device. Control rod cluster drive shafts 60 extending from the control rod drive device extend to the fuel assembly 54 through control rod cluster guide pipes 57 so that the control rod cluster 56 can be grasped. Further, in the lower core support plate 51, multiple in-furnace instrumentation guide pipes are supported through the lower core support plate 51, and the upper end portions thereof extend to the fuel assembly 54, and sensors capable of measuring neutron flux can be inserted into the in-furnace instrumentation guide pipes.

The control rod drive device controls the output of the reactor, by vertically moving the control rod cluster drive shafts (hereinafter, referred to as a "drive shafts") 60, which extends in the vertical direction to be connected to the control rod cluster 56 and has multiple circumferential grooves disposed on the surface thereof at an equal pitch in the longitudinal direction, by a magnetic jack.

The pressurized water reactor 40 is configured as described above. By moving the control rod cluster drive shafts 60 using the control rod drive device to insert the control rods 55 into the fuel assembly 54, nuclear fission in the reactor core 53 is controlled, the light water filled in the reactor vessel 41 is heated by the generated thermal energy, and the high-temperature light water is discharged from the outlet nozzle 45 and is sent to the steam generator as described above.

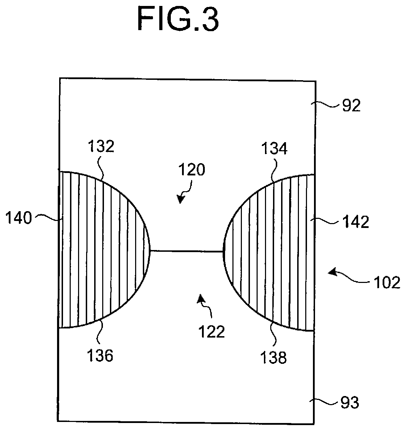

Next, a shape of the core barrel will be described with reference to FIGS. 2 and 3. FIG. 2 is a cross-sectional view illustrating a core barrel. FIG. 3 is a schematic diagram illustrating a region including a welded portion. FIG. 3 is a cross-sectional view taken along a line A-A of FIG. 2. As illustrated in FIG. 2, the core barrel 46 has a first member 91, a second member 92, a third member 93, a fourth member 94 and a fifth member 95. Each of the first member 91, the second member 92, the third member 93, the fourth member 94 and the fifth member 95 is a cylindrical member, and is disposed in an axial direction of the cylinder from one side toward the other in this order. The first member 91 and the fifth member 95 disposed at the end portions in the axial direction are shorter in the axial direction than the second member 92, the third member 93 and the fourth member 94.

In the core barrel 46, the first member 91 and the second member 92 are connected at a welded portion 101, the second member 92 and the third member 93 are connected at a welded portion 102, the third member 93 and the fourth member 94 are connected at a welded portion 103, and the fourth member 94 and the fifth member 95 are connected at a welded portion 104. The welded portions 101, 102, 103 and 104 connect the respective members by welding.

Here, the second member 92, the third member 93 and the fourth member 94 may be formed in a cylindrical shape by rolling a single plate-shaped member, may be formed in a cylindrical shape by rolling multiple platelike members and connecting them in the peripheral direction (circumferential direction), or may be manufactured into a cylindrical shape by casting or the like.

Next, the shape of the welded portion will be described for the welded portion 102 as a representative. The welded portions 101, 103 and 104 included in the core barrel 46 may have the same shape. Further, the welded portions 101, 102, 103 and 104 may have different shapes or may have the same shape in the shape, the size and the like of the groove. Further, even if the shapes, sizes and the like of the groove are different from each other, it is preferable to form the welded portions 101, 102, 103 and 104 by the same forming method and work procedure. Further, the welded portions 101, 102, 103 and 104 may have different shapes and may be formed by different forming methods. The welded portions 101, 102, 103 and 104 are linearly formed along the circumference and can also be referred to as weld lines. As illustrated in FIG. 3, the welded portion 102 welds a welding end surface 120 of the second member 92 and a welding end surface 122 of the third member 93. The welding end surface 120 and the welding end surface 122 are opposed faces of the second member 92 and the third member 93, and are ring-shaped (annular) surfaces extending in the circumferential direction. On the welding end surface 120, an inner groove 132 is formed on the inner side in the circumferential direction of the ring shape, and an outer groove 134 is formed on the outer side in the circumferential direction of the ring shape. In the welding end surface 122, an inner groove 136 is formed on the inner side in the circumferential direction of the ring shape, and an outer groove 138 is formed on the outer side in the circumferential direction of the ring shape. The inner grooves 132 and 136 are concave portions recessed outward in the radial direction. The outer grooves 134 and 138 are concave portions recessed inward in the radial direction. The welded portion 102 has an inner weld portion 140 and an outer weld portion 142. The inner weld portion 140 is formed in the recess formed by the inner grooves 132 and 136, and is joined with the inner grooves 132 and 136. The outer weld portion 142 is formed in the recess formed by the outer grooves 134 and 138, and is joined with the outer grooves 134 and 138. The inner weld portion 140 and the outer weld portion 142 of the welded portion 102 are formed by melting the filler metal using a welding system described below. Specifically, the inner weld portion 140 and the outer weld portion 142 of the welded portion 102 are formed by arc welding such as tungsten inert gas (TIG) welding.

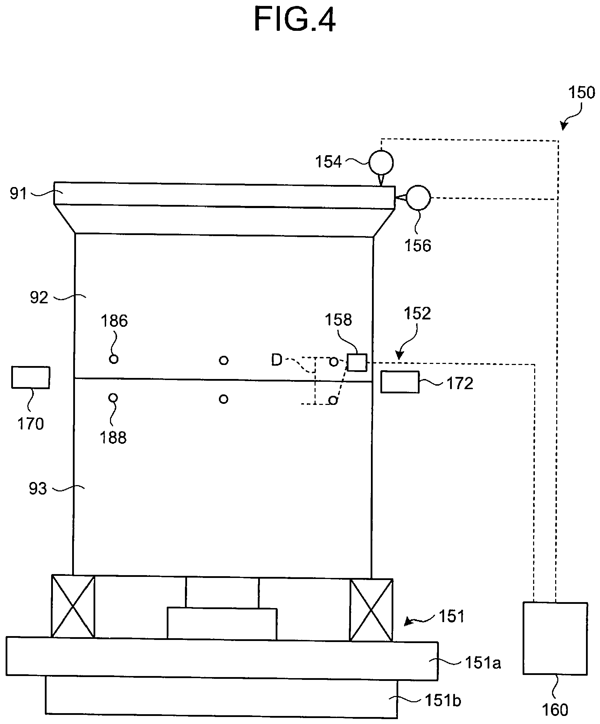

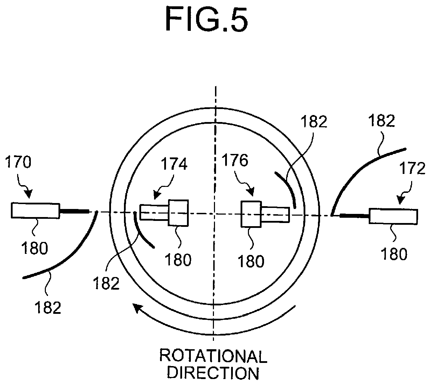

Next, a welding system 150 which forms the welded portion will be described with reference to FIGS. 4 and 5. FIG. 4 is a schematic diagram illustrating a schematic configuration of a welding system. FIG. 5 is a schematic diagram illustrating an example of arrangement of the welding apparatus of the welding system. The welding system 150 is a system which forms the welded portion 102 between the second member 92 and the third member 93, and welds the annular surfaces of the second member 92 and the third member 93 to each other. Here, in the present embodiment, the second member 92, which is a cylindrical structure disposed on the upper side in the vertical direction than the third member 93 at the time of machining, becomes an upper cylindrical structure. Further, the third member 93, which is a cylindrical structure disposed on the lower side in the vertical direction than the upper cylindrical structure, becomes a lower cylindrical structure. In the example illustrated in FIG. 4, the first member 91 is welded to an upper surface (a surface on the side opposite to the third member 93 side) of the second member 92 in the vertical direction. That is, the upper cylindrical structure is made up of the first member 91 and the second member 92, and the upper end surface in the vertical direction is the upper end surface of the first member 91 in the vertical direction.

The welding system 150 includes a moving device 151, a welding unit 152, an upper position measurement device 154, a side surface position measurement device 156, a width measurement device 158, and a control device 160.

The moving device 151 has a rotating table 151a on which the third member 93 is placed, and a driving unit 151b which rotates the rotating table 151a. The third member 93 is placed on the horizontal surface of the rotating table 151a. The rotating table 151a rotates about a vertical axis orthogonal to the horizontal plane. The moving device 151 rotates the third member 93 and the second member 92 placed on the third member 93 in the circumferential direction of the cylinder, by rotating the rotating table 151a with the driving unit 151b.

The welding unit 152 has arc welding apparatuses 170, 172, 174 and 176. The arc welding apparatus 170 is disposed at a position where the welding end surface 120 of the second member 92 and the welding end surface 122 of the third member 93 face each other, that is, at a position facing a position where the second member 92 and the third member 93 are in contact with each other, and faces the outer surfaces of the second member 92 and the third member 93 in the circumferential direction.

The arc welding apparatus 172 is disposed at a position facing the arc welding apparatus 170 in the circumferential direction, that is, at a position moved by 180° in the circumferential direction from the position where the arc welding apparatus 170 is disposed. The arc welding apparatus 174 is disposed at the same position as the arc welding apparatus 170 in the circumferential direction, at a position where the welding end surface 120 of the second member 92 and the welding end surface 122 of the third member 93 face each other, and faces the inner surfaces of the second member 92 and the third member 93 in the circumferential direction. The arc welding apparatus 176 is disposed at the same position as the arc welding apparatus 172 in the circumferential direction, at a position where the welding end surface 120 of the second member 92 and the welding end surface 122 of the third member 93 face each other, and faces the inner surfaces of the second member 92 and the third member 93 in the circumferential direction.

That is, in the welding unit 152, the arc welding apparatus 170 and the arc welding apparatus 172 are disposed at intervals of 180° on the radially outer surface of the position facing the position where the second member 92 and the third member 93 are in contact with each other. Further, in the welding unit 152, the arc welding apparatus 174 and the arc welding apparatus 176 are disposed at intervals of 180° on the radially inner surface of the position facing the position where the second member 92 and the third member 93 are in contact with each other. Also, the arc welding apparatus 170 and the arc welding apparatus 174 are positioned at the same position in the circumferential direction. The arc welding apparatus 172 and the arc welding apparatus 176 are positioned at the same position in the circumferential direction.

Each of the arc welding apparatuses 170, 172, 174 and 176 has a torch 180 serving as a heating source, and a wire (filler metal) 182 which is heated to be melted by the torch 180. Each of the arc welding apparatuses 170, 172, 174 and 176 heats the filler metal 182 and peripheral parts of the welding end surfaces 120 and 122 with the torch 180, melts the filler metal 182 to join the filler metal 182 to the welding end surfaces 120 and 122, thereby welding the welding end surface 120 and the welding end surface 122. As the arc welding apparatuses 170, 172, 174 and 176, it is possible to use various devices that melt the filler metal 182 to perform welding. As described above, it is possible to use various devices using the welding method such as tungsten inert gas (TIG) welding and plasma welding in which the filler metal and the heating source are different from each other, or various devices using the welding method such as covered arc welding, submerged arc welding, MIG welding, carbon dioxide gas arc welding, self-shielded arc welding in which the filler metal and the heating source are integrated with each other.

The upper position measurement device 154 measures positions in the height direction of the upper end surface of the first member 91 in the vertical direction. The upper position measurement device 154 is fixed to a portion separate from the moving device 151, and does not move even when the moving device 151 rotates. The upper position measurement device 154 measures the height of the upper end surface of the first member 91 in the vertical direction of the position facing a measurement terminal. As the upper position measurement device 154, it is possible to use a contact type position measurement device such as a dial cage or a non-contact type position measurement device such as a laser displacement meter. In the upper position measurement device 154, when the first member 91 rotates by the moving device 151, the position to be measured changes in the circumferential direction. The upper position measurement device 154 measures the position in the vertical direction of the cylindrical structure at each position in the circumferential direction, by measuring the position of the first member 91 at the time of rotation. Further, the upper position measurement device 154 measures, in the circumferential direction, the positions at which the upper positions in the vertical direction are the same height in the design value.

The side surface position measurement device 156 measures radial positions (a distance from the rotation axis) of the cylindrical structure on the radially outer end surface of the first member 91. The position of the side surface position measurement device 156 in the circumferential direction (rotational direction) of the cylindrical structure corresponds to that of the upper position measurement device 154. The side surface position measurement device 156 is fixed to a portion separate from the moving device 151, and does not move even when the moving device 151 rotates. The side surface position measurement device 156 measures radial position of the radially outer end surface of the first member 91 at a position facing the measurement terminal. As the side surface position measurement device 156, it is possible to use a contact type position measurement device such as a dial cage or a non-contact type position measurement device such as a laser displacement meter. In the side surface position measurement device 156, when the first member 91 rotates by the moving device 151, the position to be measured changes in the circumferential direction. The side surface position measurement device 156 measures the position in the radial direction of the cylindrical structure at each position in the circumferential direction, by measuring the position of the first member 91 at the time of rotation. Further, the side surface position measurement device 156 measures, in the circumferential direction, the positions at which the radial distances are the same distance in the design value.

The width measurement device 158 measures a distance D between a punch hole 186 formed in the second member 92 and a punch hole 188 formed in the third member 93. The width measurement device 158 may measure the distance D by coming into contact with the punch holes 186 and 188, or may measure the distance D without coming into contact with the punch holes 186 and 188. The punch holes 186 and 188 are arranged on each of the second member 92 and the third member 93 at equal arrangement intervals in the circumferential direction. By measuring the distance D at each position, the width measurement device 158 can measure a change in the distance D caused by weld contraction or the like which occurs in a region including the welded portion 102. Although the punch holes 186 and 188 are formed in this embodiment, they are not limited to the punch holes. The width measurement device 158 may detect a mark (width detection mark) which detects the displacement between the second member 92 and the third member 93. In addition to the punch holes, markers, portions having a unique shape originally present in the second member 92 and the third member, protrusions or the like can also be used as the marks.

Based on the measurement results of the upper position measurement device 154, the side surface position measurement device 156, and the width measurement device 158, predetermined conditions or operation of the operator, the control device 160 controls the operations of the moving device 151 and the welding unit 152.

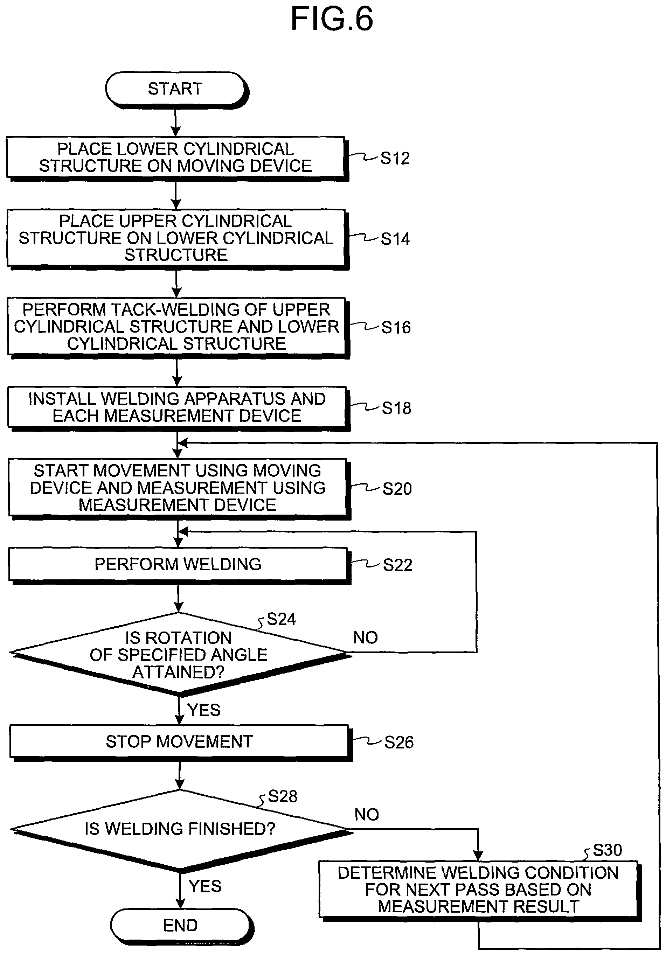

Next, an example of a welding method using the welding system 150 will be described with reference to FIG. 6. FIG. 6 is a flowchart illustrating an example of a welding method using a welding system. The process illustrated in FIG. 6 can be executed by controlling the operations of each unit through the control device 160. Further, installation of the device or the like may be executed by a worker using a conveying device or the like, or may be automatically executed under the control of the control device 160. Hereinafter, the cylindrical structure to be welded will be described as an upper cylindrical structure and a lower cylindrical structure.

The welding system 150 places the lower cylindrical structure on the moving device 151 (step S12), and places the upper cylindrical structure on the lower cylindrical structure (step S14). The upper cylindrical structure is disposed coaxially with the lower cylindrical structure, that is, at a position where the welding end surfaces of the upper cylindrical structure and the lower cylindrical structure are in contact with each other and the center axes of the cylinders coincide with each other. The upper cylindrical structure and the lower cylindrical structure may be subjected to the process of step S14 in a state in which the grooves are formed in the weld end surfaces, or may be subjected to the machining of forming the grooves after the process of step S14.

When the upper cylindrical structure is placed on the lower cylindrical structure, the welding system 150 performs tack-welding of the upper cylindrical structure and the lower cylindrical structure (step S16). The method of performing the tack-welding is not particularly limited. The tack-welding may be omitted. After performing the tack-welding, the welding system 150 installs the welding apparatus and each measurement device (step S18). Specifically, the welding system 150 disposes the respective arc welding apparatuses 170, 172, 174 and 176 of the welding unit 152 at the positions which face the welding end surfaces of the upper cylindrical structure and the lower cylindrical structure. Further, the welding system 150 installs the upper position measurement device 154 at a position facing the vertically upper surface of the upper cylindrical structure, and installs the side surface position measurement device 156 at a position facing the radially outer surface of the upper cylindrical structure. The width measurement device 158 is also installed as needed.

After installing the welding apparatus and each measurement device, the welding system 150 starts the movement using the moving device 151 and the measurement using the measurement device (step S20), and performs welding (step S22). That is, the welding end surface of the upper cylindrical structure and the welding end surface of the lower cylindrical structure are welded by each of the arc welding apparatuses 170, 172, 174 and 176 of the welding unit 152 while rotating the upper cylindrical structure and the lower cylindrical structure relative to the welding unit 152 by the moving device 151. That is, the filler metal is melted to be welded between the welding end surfaces. Further, the welding system 150 performs welding on both of the outer side and the inner side in the circumferential direction at two locations spaced apart from each other by 180° in the circumferential direction (the rotational direction).

After performing the welding, the welding system 150 determines whether or not the upper cylindrical structure and the lower cylindrical structure are rotated at a specified angle (step S24) relative to the welding unit 152. Here, since the arc welding apparatuses 170, 172, 174 and 176 are arranged at intervals of 180° in the welding system 150 of the present embodiment, the specified angle is, for example, 180°. The specified angle is not limited to 180°. When the welding system 150 determines that rotation of the specified angle is not attained (No in step S24), the process returns to step S22, and the welding is performed, while performing the relative rotation by the moving device 151. That is, the welding system 150 performs welding, while rotating the upper cylindrical structure and the lower cylindrical structure relative to the welding unit 152 until rotation of the specified angle is attained.

When it is determined that rotation of the specified angle is attained (Yes in step S24), the welding system 150 stops the movement (step S26). That is, the rotations of the upper cylindrical structure and the lower cylindrical structure using the moving device 151 are stopped, the welding is also stopped, and the welding in one welding pass is finished.

After stopping the movement, the welding system 150 determines whether the welding is finished (step S28). That is, it is determined whether the welding between the upper cylindrical structure and the lower cylindrical structure is completed, and the welded portion is completed.

When it is determined that the welding is not finished (No in step S28), the welding system 150 determines the welding condition for the next pass based on the measurement result (step S30), returns to step S20, and performs welding of the next welding pass. Specifically, the welding system 150 detects an occurrence of inclination (tilt) or the like of the upper cylindrical structure with respect to the lower cylindrical structure, based on fluctuations in the position facing the upper surface of the upper cylindrical structure in the vertical direction measured by the upper position measurement device 154 and fluctuations in the outer surface of the upper cylindrical structure in the radial direction measured by the side surface position measurement device 156. Further, the welding system 150 determines the movement speed of the moving device 151, the position and output of each of the arc welding apparatuses 170, 172, 174 and 176 based on the detection results. By adjusting the welding condition in this manner, the welding system 150 performs welding, while suppressing the inclination or the like. When it is determined that the welding is finished (Yes in step S28), the welding system 150 finishes the main process. Further, after determining that the welding is finished, the welding system 150 may perform finishing treatment of the welded portion and may form the surface of the welded portion into a smooth shape.

As described above, the welding system 150 can perform welding, while uniformly heating the upper cylindrical structure and the lower cylindrical structure in the circumferential direction, by uniformly disposing the arc welding apparatuses in the circumferential direction, and by continuously performing the welding by the arc welding apparatus, while rotationally moving the upper cylindrical structure and the lower cylindrical structure by the arrangement interval. Therefore, heat applied by welding can be equalized in the circumferential direction with respect to the upper cylindrical structure and the lower cylindrical structure, and occurrence of inclination caused by machining during welding can be reduced. Further, by continuously performing the welding while rotationally moving by the arrangement interval, it is possible to weld many areas by single machining. As a result, the time required for welding can be shortened.

Further, the welding system 150 can further reduce the inclination (tilt) of the upper cylindrical structure with respect to the lower cylindrical structure, by adjusting the welding condition based on the measurement result. Although the welding system 150 of the present embodiment adjusts the welding condition based on the upper position measurement device 154 and the side surface position measurement device 156, the welding condition may be adjusted based on the result of the width measurement device 158. Further, as in the present embodiment, by adjusting the welding condition of the next pass based on the measurement result at the time of one pass, the welding system 150 can immediately perform correction and can further reduce the inclination, when the inclination (tilt) of the upper cylindrical structure with respect to the lower cylindrical structure occurs.

In the welding system 150 of the present embodiment, the arc welding apparatuses are disposed at two locations in the circumferential direction of the cylindrical structure, that is, at intervals of 180°, but the present invention is not limited thereto. In the welding system 150 of the present embodiment, the arc welding apparatuses may be arranged at equal arrangement intervals (equiangular arrangement intervals) in the circumferential direction of the cylindrical structure, and the arc welding apparatuses may be disposed at three, four or five locations or more in the circumferential direction. The welding system 150 is disposed at intervals of 120° when the arc welding apparatuses are disposed at three locations. In addition, the welding system 150 is disposed at intervals of 90° when the arc welding apparatuses are disposed at four locations. Further, the welding system 150 may continuously rotate the arc welding apparatuses, by setting the angular range of the arrangement interval of the arc welding apparatuses disposed at least in the circumferential direction as a specified angle. Further, the welding system 150 may continuously rotate the arc welding apparatuses, by setting the angular range equal to or greater than the angle of the arrangement interval of the arc welding apparatuses disposed in the circumferential direction, for example, 360° as a specified angle.

In the welding system 150 of the present embodiment, the arc welding apparatuses are provided on both sides of the inside and the outside of the cylindrical structure, but the arc welding apparatus may be provided only on one side. Further, the welding system 150 may make installation positions of the arc welding apparatuses movable on the inside and the outside of the cylindrical structure and weld the outside of the cylindrical structure after welding the inside of the cylindrical structure, and vice versa. In either case, multiple arc welding apparatuses are disposed at equal arrangement intervals (equiangular arrangement intervals) in the circumferential direction either on the inside or the outside of the cylindrical structure.

Further, in the welding system 150 of the present embodiment, welding using the filler metal was performed with the arc welding using the arc welding apparatus. However, welding using the filler metal by the high-density energy welding may be performed, by utilizing the high-density energy welding apparatus, instead of the arc welding apparatus. The high-density energy welding apparatus emits high-density energy of electron beam welding, laser welding, or the like to melt the filler metal to perform welding. Even in the high-density energy welding, by performing welding with multiple apparatuses at equal arrangement intervals, heat contraction can be achieved in a well-balanced manner, and the aforementioned effect can be obtained.

In the welding system 150 of the present embodiment, the depths (sizes) of the inner groove and the outer groove may have the same shape, and the inner welding portion and the outer welding portion may have the same depth (size), but may have different sizes.

In the aforementioned embodiment, the present invention is not limited to the aforementioned pressurized water reactor (reactor internal structure of PWR), but can be used for welding various members with weld ring-shaped surfaces of cylindrical structures to be welded as described above.

### Reference Signs List

- 40: PRESSURIZED WATER REACTOR
- 41: REACTOR VESSEL
- 46: CORE BARREL
- 53: REACTOR CORE
- 54: FUEL ASSEMBLY
- 55: CONTROL ROD
- 57: CONTROL ROD CLUSTER GUIDE PIPE
- 60: CONTROL ROD CLUSTER DRIVE SHAFT
- 91: FIRST MEMBER
- 92: SECOND MEMBER
- 93: THIRD MEMBER
- 94: FOURTH MEMBER
- 95: FIFTH MEMBER
- 101, 102, 103, 104: WELDED PORTION
- 120, 122: WELD END SURFACE
- 132, 136: INNER GROOVE
- 134, 138: OUTER GROOVE
- 140: INNER WELD PORTION
- 142: OUTER WELD PORTION
- 150: WELDING SYSTEM
- 151: MOVING DEVICE
- 152: WELDING UNIT
- 154: UPPER POSITION MEASUREMENT DEVICE
- 156: SIDE SURFACE POSITION MEASUREMENT DEVICE
- 158: WIDTH MEASUREMENT DEVICE
- 160: CONTROL DEVICE
- 170, 172, 174, 176: ARC WELDING APPARATUS
- 180: TORCH
- 182: WIRE (FILLER METAL)
- 186, 188: PUNCH HOLE

## Claims

1. A welding system (150) of cylindrical structures configured to weld a welding end surface (120) of an upper cylindrical structure (92) and a welding end surface (122) of a lower cylindrical structure (93), each of which being an end surface in an axial direction thereof and facing each other, the welding system (150) comprising:
two or more welding apparatuses (170, 172, 174, 176) which are opposite to the welding end surfaces (120, 122) of the upper cylindrical structure (92) and the lower cylindrical structure (93) and are disposed at equal arrangement intervals in the circumferential direction of the cylindrical structures (92, 93);
a moving device (151) which is configured to rotate the upper cylindrical structure (92) and the lower cylindrical structure (93) relative to the welding apparatuses (170, 172, 174, 176) in a circumferential direction of the cylindrical structures (92, 93);
a control device (160) which is configured to control operations of the welding apparatuses (170, 172, 174, 176) and the moving device (151),
wherein each of the welding apparatuses (170, 172, 174, 176) has a filler metal (182) and a heating source (180) which melts the filler metal (182), and is configured to melt and fuse the filler metal (182) on the welding end surfaces (120, 122) to thereby weld the welding end surfaces (120, 122), and
the control device (160) is further configured to control the moving device (151) to continuously rotate the upper cylindrical structure (92) and the lower cylindrical structure (93) by an angle of the arrangement interval of the welding apparatuses (170, 172, 174, 176), while welding the welding end surfaces (120, 122) with the welding apparatuses (170, 172, 174, 176);
the welding system being **characterised by**
a side surface position detection unit (156) which is configured to measure a position of a side surface of the upper cylindrical structure (92);
an upper surface position detection unit (154) which is configured to measure a position of an upper surface of the upper cylindrical structure (92); and
a width detection unit (158) which is configured to measure displacement between the upper cylindrical structure (92) and the lower cylindrical structure (93), and
the control device (160) is further configured to detect a positional deviation of the upper cylindrical structure (92) with respect to the lower cylindrical structure (93) based on the position detected by the side surface position detection unit (156), the position detected by the upper surface position detection unit (154) and the displacement detected by the width detection unit (158), and control the operations of the moving device (151) and the welding apparatuses (170, 172, 174, 176) based on the detected positional deviation.

2. The welding system of the cylindrical structures according to claim 1, wherein each of the welding apparatuses (170, 172, 174, 176) is configured to weld the welding end surfaces (120, 122) by arc welding or high-density energy.

3. The welding system of the cylindrical structures according to claim 1 or 2, wherein the control device (160) is further configured to detect the positions by the side surface position detection unit (156) and the upper surface position detection unit (154), while controlling the moving device (151) to continuously rotate the upper cylindrical structure (92) and the lower cylindrical structure (93) by the angle of the arrangement interval of the welding apparatuses (170, 172, 174, 176), and
the control device (160) is further configured to determine a next welding condition to continuously rotate the upper cylindrical structure (92) and the lower cylindrical structure (93) by the angle of the arrangement interval of the welding apparatuses (170, 172, 174, 176) by the moving device (151), while welding the welding end surfaces (120, 122) with the welding apparatuses (170, 172, 174, 176), based on the detected result.

4. The welding system of the cylindrical structures according to any one of claims 1 to 3, wherein the welding apparatuses (170, 172, 174, 176) include an outer welding apparatus (170, 172) which is configured to weld the welding end surfaces (120, 122) of the upper cylindrical structure (92) and the lower cylindrical structure (93) on a radially outer side of the cylindrical structures (92, 93) .

5. The welding system of the cylindrical structures according to any one of claims 1 to 4, wherein the welding apparatuses (170, 172, 174, 176) include an inner welding apparatus (174, 176) which is configured to weld the welding end surfaces (120, 122) of the upper cylindrical structure (92) and the lower cylindrical structure (93) on a radially inner side of the cylindrical structures (92, 93) .

6. A method of welding cylindrical structures (92, 93), the method comprising:
placing an upper cylindrical structure (92) on a lower cylindrical structure (93) and bringing a welding end surface (120) of an upper cylindrical structure (92) and a welding end surface (122) of a lower cylindrical structure (93) into contact with each other, each of which being an end surface and facing each other;
melting and fusing a filler metal (182) on the welding end surfaces (120, 122) by two or more welding apparatuses (170, 172, 174, 176) which are opposite to the welding end surfaces (120, 122) of the upper cylindrical structure (92) and the lower cylindrical structure (93) and are disposed at equal arrangement intervals in the circumferential direction of the cylindrical structures (92, 93), and continuously rotating the welding end surfaces (120, 122) by an angle of the arrangement interval of the welding apparatuses (170, 172, 174, 176), while welding the welding end surfaces (120, 122)
wherein the continuous rotation by the angle of the arrangement interval of the welding apparatuses (170, 172, 174, 176) is performed multiple times, and
the method being **characterised by**
measuring a position of a side surface of the upper cylindrical structure (92), a position of an upper surface of the upper cylindrical structure (92) and a displacement between the upper cylindrical structure (92) and the lower cylindrical structure (93) while continuously rotating the upper cylindrical structure (92) and the lower cylindrical structure (93) by the angle of the arrangement interval of the welding apparatuses (170, 172, 174, 176); and
determining a next welding condition to continuously rotate the upper cylindrical structure (92) and the lower cylindrical structure (93) by the angle of the arrangement interval of the welding apparatuses (170, 172, 174, 176), while welding the welding end surfaces (120, 122) with the welding apparatuses (170, 172, 174, 176), based on the detected result.

## Patentansprüche

1. Schweißsystem (150) von zylindrischen Strukturen, das dazu ausgelegt ist, eine Schweißendfläche (120) einer oberen zylindrischen Struktur (92) und eine Schweißendfläche (122) einer unteren zylindrischen Struktur (93) zu schweißen, von denen jede eine Endfläche in einer Axialrichtung davon ist und die einander zugewandt sind, wobei das Schweißsystem (150) Folgendes umfasst:
zwei oder mehr Schweißeinrichtungen (170, 172, 174, 176), die den Schweißendflächen (120, 122) der oberen zylindrischen Struktur (92) und der unteren zylindrischen Struktur (93) gegenüberliegen und in der Umfangsrichtung der zylindrischen Strukturen (92, 93) in gleichen Arrangementintervallen angeordnet sind;
eine sich bewegende Vorrichtung (151), die dazu ausgelegt ist, die obere zylindrischen Struktur (92) und die untere zylindrische Struktur (93) relativ zu den Schweißeinrichtungen (170, 172, 174, 176) in eine Umfangsrichtung der zylindrischen Strukturen (92, 93) zu drehen;
eine Steuervorrichtung (160), die dazu ausgelegt ist, den Betrieb der Schweißeinrichtungen (170, 172, 174, 176) und der sich bewegenden Vorrichtung (151) zu steuern,
wobei jede der Schweißeinrichtungen (170, 172, 174, 176) ein Füllmetall (182) und eine Heizquelle (180), die das Füllmetall (182) schmilzt, aufweist und dazu ausgelegt ist, das Füllmetall (182) auf der Schweißendfläche (120, 122) zu schmelzen und zu fusionieren, um dadurch die Schweißendflächen (120, 122) zu schweißen, und
die Steuervorrichtung (160) ferner dazu ausgelegt ist, die sich bewegende Vorrichtung (151) derart zu steuern, dass sie die obere zylindrische Struktur (92) und die untere zylindrische Struktur (93) um einen Winkel des Arrangementintervalls der Schweißeinrichtungen (170, 172, 174, 176) kontinuierlich dreht, während die Schweißendflächen (120, 122) mit den Schweißeinrichtungen (170, 172, 174, 176) geschweißt werden;
wobei das Schweißsystem durch Folgendes gekennzeichnet ist
eine Seitenflächenpositionsdetektionseinheit (156), die dazu ausgelegt ist, eine Position einer Seitenfläche der oberen zylindrischen Struktur (92) zu messen;
eine obere Flächenpositionsdetektionseinheit (154), die dazu ausgelegt ist, eine Position einer oberen Fläche der oberen zylindrischen Struktur (92) zu messen; und
eine Breitendetektionseinheit (158), die dazu ausgelegt ist, einen Versatz zwischen der oberen zylindrischen Struktur (92) und der unteren zylindrischen Struktur (93) zu messen,
und
die Steuervorrichtung (160) ferner dazu ausgelegt ist, auf Basis der Position, die von der Seitenflächenpositionsdetektionseinheit (156) detektiert wird, der Position, die von der oberen Flächenpositionsdetektionseinheit (154) detektiert wird, und des Versatzes, der von der Breitendetektionseinheit (158) detektiert wird, eine Positionsabweichung der oberen zylindrischen Struktur (92) mit Bezug auf die untere zylindrische Struktur (93) zu detektieren und den Betrieb der sich bewegenden Vorrichtung (151) und der Schweißeinrichtungen (170, 172, 174, 176) auf Basis der detektierten Positionsabweichung zu steuern.

2. Schweißsystem der zylindrischen Strukturen nach Anspruch 1, wobei jede der Schweißeinrichtungen (170, 172, 174, 176) dazu ausgelegt ist, die Schweißendflächen (120, 122) mittels Lichtbogenschweißung oder hochdichter Energie zu schweißen.

3. Schweißsystem der zylindrischen Strukturen nach Anspruch 1 oder 2, wobei die Steuervorrichtung (160) ferner dazu ausgelegt ist, die Positionen mit der Seitenflächenpositionsdetektionseinheit (156) und der oberen Flächenpositionsdetektionseinheit (154) zu detektieren, während sie die sich bewegende Vorrichtung (151) derart steuert, dass sie die obere zylindrische Struktur (92) und die untere zylindrische Struktur (93) um den Winkel des Arrangementintervalls der Schweißeinrichtungen (170, 172, 174, 176) kontinuierlich dreht, und
die Steuervorrichtung (160) ferner dazu ausgelegt ist, auf Basis des detektierten Ergebnisses eine nächste Schweißbedingung zu bestimmen, um die obere zylindrische Struktur (92) und die untere zylindrische Struktur (93) um den Winkel des Arrangementintervalls der Schweißeinrichtungen (170, 172, 174, 176) mittels der sich bewegenden Vorrichtung (151) kontinuierlich zu drehen, während die Schweißendflächen (120, 122) mit den Schweißeinrichtungen (170, 172, 174, 176) geschweißt werden.

4. Schweißsystem der zylindrischen Strukturen nach einem der Ansprüche 1 bis 3, wobei die Schweißeinrichtungen (170, 172, 174, 176) eine äußere Schweißeinrichtung (170, 172) beinhalten, die dazu ausgelegt ist, die Schweißendflächen (120, 122) der oberen zylindrischen Struktur (92) und der unteren zylindrischen Struktur (93) auf einer radialen Außenseite der zylindrischen Strukturen (92, 93) zu schweißen.

5. Schweißsystem der zylindrischen Strukturen nach einem der Ansprüche 1 bis 4, wobei die Schweißeinrichtungen (170, 172, 174, 176) eine innere Schweißeinrichtung (174, 176) beinhalten, die dazu ausgelegt ist, die Schweißendflächen (120, 122) der oberen zylindrischen Struktur (92) und der unteren zylindrischen Struktur (93) auf einer radialen Innenseite der zylindrischen Strukturen (92, 93) zu schweißen.

6. Verfahren zum Schweißen von zylindrischen Strukturen (92, 93), wobei das Verfahren Folgendes umfasst:
Platzieren einer oberen zylindrischen Struktur (92) auf einer unteren zylindrischen Struktur (93) und miteinander Inkontaktbringen einer Schweißendfläche (120) einer oberen zylindrischen Struktur (92) und einer Schweißendfläche (122) einer unteren zylindrischen Struktur (93), von denen jede eine Endfläche ist und die einander zugewandt sind;
Schmelzen und Fusionieren eines Füllmetalls (182) auf den Schweißendflächen (120, 122) mittels zweier oder mehrerer Schweißeinrichtungen (170, 172, 174, 176), die den Schweißendflächen (120, 122) der oberen zylindrischen Struktur (92) und der unteren zylindrischen Struktur (93) gegenüberliegen und in der Umfangsrichtung der zylindrischen Strukturen (92, 93) in gleichen Arrangementintervallen angeordnet sind, und kontinuierliches Drehen der Schweißendflächen (120, 122) um einen Winkel des Arrangementintervalls der Schweißeinrichtungen (170, 172, 174, 176), während die Schweißendflächen (120, 122) geschweißt werden
wobei das kontinuierliche Drehen um den Winkel des Arrangementintervalls der Schweißeinrichtungen (170, 172, 174, 176) mehrere Male durchgeführt wird und
das Verfahren durch Folgendes gekennzeichnet ist
Messen einer Position einer Seitenfläche der oberen zylindrischen Struktur (92), einer Position einer oberen Fläche der oberen zylindrischen Struktur (92) und eines Versatzes zwischen der oberen zylindrischen Struktur (92) und der unteren zylindrischen Struktur (93), während die obere zylindrische Struktur (92) und die untere zylindrische Struktur (93) kontinuierlich um den Winkel des Arrangementintervalls der Schweißeinrichtungen (170, 172, 174, 176) gedreht werden; und
Bestimmen einer nächsten Schweißbedingung auf Basis des detektierten Ergebnisses, um die obere zylindrische Struktur (92) und die untere zylindrische Struktur (93) um den Winkel des Arrangementintervalls der Schweißeinrichtungen (170, 172, 174, 176) kontinuierlich zu drehen, während die Schweißendflächen (120, 122) mit den Schweißeinrichtungen (170, 172, 174, 176) geschweißt werden.

## Revendications

1. Système de soudage (150) de structures cylindriques configuré pour souder une surface d'extrémité de soudage (120) d'une structure cylindrique supérieure (92) et une surface d'extrémité de soudage (122) d'une structure cylindrique inférieure (93), dont chacune est une surface d'extrémité dans sa direction axiale et se faisant face, le système de soudage (150) comprenant :
deux ou plusieurs appareils de soudage (170, 172, 174, 176) qui sont opposés aux surfaces d'extrémité de soudage (120, 122) de la structure cylindrique supérieure (92) et la structure cylindrique inférieure (93) et sont disposés à des intervalles d'agencement identiques dans la direction circonférentielle des structures cylindriques (92, 93) ;
un dispositif de déplacement (151) qui est configuré pour faire tourner la structure cylindrique supérieure (92) et la structure cylindrique inférieure (93) par rapport aux appareils de soudage (170, 172, 174, 176) dans une direction circonférentielle des structures cylindriques (92, 93) ;
un dispositif de commande (160) qui est configuré pour commander les opérations des appareils de soudage (170, 172, 174, 176) et le dispositif de déplacement (151),
dans lequel chacun des appareils de soudage (170, 172, 174, 176) a un métal de remplissage (182) et une source de chauffage (180) qui fait fondre le métal de remplissage (182) et est configuré pour faire fondre et réunir par fusion le métal de remplissage (182) sur les surfaces d'extrémité de soudage (120, 122) pour souder ainsi les surfaces d'extrémité de soudage (120, 122), et
le dispositif de commande (160) est en outre configuré pour commander le dispositif de déplacement (151) pour faire tourner de manière continue la structure cylindrique supérieure (92) et la structure cylindrique inférieure (93) selon un angle de l'intervalle d'agencement des appareils de soudage (170, 172, 174, 176), tout en soudant les surfaces d'extrémité de soudage (120, 122) avec les appareils de soudage (170, 172, 174, 176), le système de soudage étant **caractérisé par** :
une unité de détection de position de surface latérale (156) qui est configurée pour mesurer une position d'une surface latérale de la structure cylindrique supérieure (92) ;
une unité de détection de position de surface supérieure (154) qui est configurée pour mesurer une position d'une surface supérieure de la structure cylindrique supérieure (92) ; et
une unité de détection de largeur (158) qui est configurée pour mesurer le déplacement entre la structure cylindrique supérieure (92) et la structure cylindrique inférieure (93), et
le dispositif de commande (160) est en outre configuré pour détecter une déviation de position de la structure cylindrique supérieure (92) par rapport à la structure cylindrique inférieure (93) sur la base de la position détectée par l'unité de détection de position de surface latérale (156), la position détectée par l'unité de détection de position de surface supérieure (154) et le déplacement détecté par l'unité de détection de largeur (158), et commander les opérations du dispositif de déplacement (151) et des appareils de soudage (170, 172, 174, 176) sur la base de la déviation de position détectée.

2. Système de soudage de structures cylindriques selon la revendication 1, dans lequel chacun des appareils de soudage (170, 172, 174, 176) est configuré pour souder les surfaces d'extrémité de soudage (120, 122) par soudage à l'arc ou énergie à haute densité.

3. Système de soudage de structures cylindriques selon la revendication 1 ou 2, dans lequel le dispositif de commande (160) est en outre configuré pour détecter les positions par l'unité de détection de position de surface latérale (156) et l'unité de détection de position de surface supérieure (154), tout en commandant le dispositif de déplacement (151) pour faire tourner de manière continue la structure cylindrique supérieure (92) et la structure cylindrique inférieure (93) selon l'angle de l'intervalle d'agencement des appareils de soudage (170, 172, 174,176), et
le dispositif de commande (160) est en outre configuré pour déterminer une condition de soudage suivante pour faire tourner de manière continue la structure cylindrique supérieure (92) et la structure cylindrique inférieure (93) selon l'angle de l'intervalle d'agencement des appareils de soudage (170,172, 174, 176) par le dispositif de déplacement (151), tout en soudant les surfaces d'extrémité de soudage (120, 122) avec les appareils de soudage (170, 172, 174, 176), sur la base du résultat détecté.

4. Système de soudage de structures cylindriques selon l'une quelconque des revendications 1 à 3, dans lequel les appareils de soudage (170, 172, 174, 176) comprennent un appareil de soudage externe (170, 172) qui est configuré pour souder les surfaces d'extrémité de soudage (120, 122) de la structure cylindrique supérieure (92) et la structure cylindrique inférieure (93) sur un côté radialement externe des structures cylindriques (92, 93).

5. Système de soudage de structures cylindriques selon l'une quelconque des revendications 1 à 4, dans lequel les appareils de soudage (170, 172, 174, 176) comprennent un appareil de soudage interne (174, 176) qui est configuré pour souder les surfaces d'extrémité de soudage (120, 122) de la structure cylindrique supérieure (92) et la structure cylindrique inférieure (93) sur un côté radialement interne des structures cylindriques (92, 93).

6. Procédé pour souder des structures cylindriques (92, 93), le procédé comprenant les étapes suivantes :
placer une structure cylindrique supérieure (92) sur une structure cylindrique inférieure (93) et amener une surface d'extrémité de soudage (120) d'une structure cylindrique supérieure (92) et une surface d'extrémité de soudage (122) d'une structure cylindrique inférieure (93) en contact entre elles, dont chacune est une surface d'extrémité et fait face à l'autre;
faire fondre et réunir par fusion un métal de remplissage (182) sur les surfaces d'extrémité de soudage (120, 122) avec deux ou plusieurs appareils de soudage (170, 172, 174, 176) qui sont opposés aux surfaces d'extrémité de soudage (120, 122) de la structure cylindrique supérieure (92) et de la structure cylindrique inférieure (93) et sont disposés à des intervalles d'agencement identiques dans la direction circonférentielle des structures cylindriques (92, 93) et faisant tourner de manière continue les surfaces d'extrémité de soudage (120, 122) selon un angle de l'intervalle d'agencement des appareils de soudage (170, 172, 174, 176), tout en soudant les surfaces d'extrémité de soudage (120, 122),
dans lequel la rotation continue selon l'angle de l'intervalle d'agencement des appareils de soudage (170, 172, 174, 176) est réalisée plusieurs fois, et
le procédé étant **caractérisé par** :
mesurer une position d'une surface latérale de la structure cylindrique supérieure (92), une position d'une surface supérieure de la structure cylindrique supérieure (92) et un déplacement entre la structure cylindrique supérieure (92) et la structure cylindrique inférieure (93) tout en faisant tourner de manière continue la structure cylindrique supérieure (92) et la structure cylindrique inférieure (93) selon l'angle de l'intervalle d'agencement des appareils de soudage (170, 172, 174, 176) ; et
déterminer une condition de soudage suivante pour faire tourner de manière continue la structure cylindrique supérieure (92) et la structure cylindrique inférieure (93) selon l'angle de l'intervalle d'agencement des appareils de soudage (170, 172, 174, 176), tout en soudant les surfaces d'extrémité de soudage (120, 122) avec les appareils de soudage (170, 172, 174, 176) sur la base du résultat détecté.
